# EUROPÄISCHE PATENTSCHRIFT

(11) **EP 3 526 886 B1**
(45) Veröffentlichungstag und Bekanntmachung des Hinweises auf die Patenterteilung: **05.05.2021**
(21) Anmeldenummer: 17778172.1
(22) Anmeldetag: 15.09.2017
(51) Int. Cl.: B60K 6/387, B60K 6/40, B60K 6/48, F16D 13/46, H02K 7/108, F16D 13/69, F16D 21/06, F16D 13/52

(54) **KUPPLUNGSEINRICHTUNG**
CLUTCH ARRANGEMENT
DISPOSITIF DE COUPLAGE

(30) Priorität: 11.10.2016 DE 102016219693
(43) Veröffentlichungstag der Anmeldung: 21.08.2019
(73) Patentinhaber: Schaeffler Technologies AG & Co. KG, 91074 Herzogenaurach (DE)
(72) Erfinder: SIMONOV, Anton, 77815 Bühl (DE); LORENZ, Elmar, 77836 Rheinmünster Söllingen (DE); LARBIG, Julian, 37296 Ringgau (DE); BAUMGARTNER, Andreas, 76532 Baden-Baden (DE)
(86) Internationale Anmeldenummer: PCT/DE2017/100788
(87) Internationale Veröffentlichungsnummer: WO 2018/068783

(56) Entgegenhaltungen:
- EP-A1- 2 287 487
- EP-A2- 1 079 132
- DE-A1-102011 004 585
- US-A- 3 279 572

## Beschreibung

Die Erfindung betrifft eine Kupplungseinrichtung gemäß Anspruch 1.

Eine Kupplungseinrichtung mit mehreren Teilkupplungen für Hybridantriebstränge ist aus der EP 2 287 487 A1 bekannt.

Bezüglich weiteren Standes der Technik wird auf die US 3 279 572 A, die DE 10 2011 004585 A1 und die EP 1 079 132 A2 verwiesen.

Eine solche Kupplungseinrichtung dient in bekannter Weise dazu den Abtrieb einer Antriebseinrichtung, beispielsweise einer Brennkraftmaschine, mit einem Getriebe zu koppeln. Bei modernen Kraftfahrzeugen mit einem Hybridantrieb ist zusätzlich ein Elektromotor vorgesehen, der ebenfalls über eine solche Kupplungseinrichtung mit dem Getriebe gekoppelt werden kann, um einen elektrischen Fahrbetrieb zu ermöglichen. Er ist darüber hinaus aber auch mit der Brennkraftmaschine über deren Abtrieb koppelbar oder gekoppelt, um diese beispielsweise beim Starten zu unterstützen oder anzutreiben.

Um diese einzelnen Kopplungen zu realisieren umfasst eine solche Kupplungseinrichtung zwei Teilkupplungen. Über die erste Teilkupplung ist der Rotor der Elektromaschine mit einer über eine Brennkraftmaschine oder dergleichen antreibbaren Antriebsnabe verbunden. Dies erfolgt über einen ersten Lamellenträger dieser ersten Teilkupplung, der mit der Antriebsnabe verbunden oder verbindbar ist. Der Rotor selbst ist mit einem ersten Außenlamellenträger verbunden. An diesem sind üblicherweise zwei Außenlamellen, üblicherweise Stahllamellen, angeordnet, in die eine am ersten Innenlamellenträger angeordnete Innenlamelle, üblicherweise eine Reiblamelle, mit einem Träger und beidseitigen Reibbelägen, eingreift. Über ein geeignetes Betätigungselement kann dieses zumeist lediglich aus diesen drei Lamellen bestehende Lamellenpaket zusammengedrückt und in Reibschluss gebracht werden. Damit ist der Rotor der Elektromaschine mit der Antriebsnabe verbunden, so dass eine Rotorrotation auf die Antriebsnabe übertragen werden kann. Da diese ihrerseits mit der Brennkraftmaschine gekoppelt ist, kann hierüber die Brennkraftmaschine zum Starten angetrieben werden.

Zur Kopplung sowohl der Brennkraftmaschine als auch des Elektromotors mit dem Getriebe ist eine zweite Teilkupplung vorgesehen, die ebenfalls einen Außenlamellenträger aufweist, an dem eine Vielzahl an zweiten Außenlamellen axial beweglich angeordnet sind. Bei diesem Außenlamellenträger kann es sich entweder um den ersten Außenlamellenträger, der mit dem Rotor der Elektromaschine gekoppelt ist, handeln, das heißt, dass die ersten und die zweiten Außenlamellen am gleichen Außenlamellenträger angeordnet sind. Alternativ kann es sich aber auch um einen separaten zweiten Außenlamellenträger handeln.

Vorgesehen ist des Weiteren ein zweiter Innenlamellenträger mit einer Vielzahl zweiter Innenlamellen, wobei auch hier die zweiten Außenlamellen Stahllamellen und die zweiten Innenlamellen Reiblamellen sind. Die zweiten Außen- und Innenlamellen bilden ebenfalls ein axial zusammendrückbares zweites Lamellenpaket. Der zweite Lamellenträger ist mit einer mit dem Getriebe gekoppelten oder koppelbaren Antriebsnabe verbunden. Hierüber kann eine über die Brennkraftmaschine oder die Elektromaschine erwirkte Rotation des Außenlamellenträgers der zweiten Teilkupplung auf die mit dem Getriebe gekoppelte Antriebsnabe übertragen werden.

Der Betrieb eines solchen Hybridantriebs kann auf unterschiedliche Weise erfolgen.

Im Falle eines reinen Elektroantriebs wird die Rotation des Rotors über die zweite Teilkupplung auf die Antriebsnabe und damit das Drehmoment an das Getriebe gegeben. Die erste Teilkupplung ist hierbei geöffnet, eine Kopplung zur Brennkraftmaschine ist daher nicht gegeben. Über den Rotor ist folglich der Außenlamellenträger der zweiten Teilkupplung anzutreiben. Handelt es sich bei diesem um den ersten Außenlamellenträger, der ohnehin mit dem Rotor verbunden ist, ist dessen Rotation zwangsläufig bei einer Rotorrotation gegeben. Weist die zweite Teilkupplung einen separaten zweiten Außenlamellenträger auf so ist dieser in entsprechender Weise mit dem Rotor gekoppelt.

Soll der Antrieb über die Brennkraftmaschine erfolgen, so wird die erste Teilkupplung geschlossen, das heißt, dass die brennkraftmaschinenseitige Antriebsnabe mit dem Rotor gekoppelt ist. Aufgrund dessen Kopplung zur zweiten Teilkupplung kann das von der Brennkraftmaschine erzeugte Moment über die erste und zweite Teilkupplung an die Antriebsnabe und damit an das Getriebe übertragen werden. In diesem Fall dreht der Rotor der hier nicht betriebenen Elektromaschine mit.

Zur Betätigung der beiden Teilkupplungen sind entsprechende Betätigungselemente vorgesehen, beispielsweise in Form von Drucktöpfen, die jeweils gegen eine axial außenliegende Außenlamelle drücken, um das jeweilige Lamellenpaket gegen einen Anschlag zu schieben und in Reibschluss zu bringen. Wird das jeweilige Lamellenpaket entlastet, so sollen sich die zusammengedrückten Lamellen voneinander trennen, man spricht von einem "Lüften" des Lamellenpakets. Dies dient dazu den Reibschluss und damit den Momentenübertrag aufzuheben. Aufgrund der Vielzahl der innerhalb des zweiten Lamellenpaktes der zweiten Teilkupplung gegebenen Lamellen- oder Reibpaarungen stellt sich in diesem Lamellenpaket sehr schnell der gelüftete Zustand ein, nachdem es ausreichend ist, wenn bereits wenige Reibpaarungen getrennt sind, da dann die anderen in der Regel zwangsläufig folgen. Anders jedoch bei der ersten Teilkupplung, wo nur eine Lamellenpaarung umfassend die beiden ersten Außenlamellen sowie die zwischen diese greifende erste Innenlamelle vorgesehen ist. Denn wenn sich dort nicht unmittelbar mit dem Entlasten der ersten Teilkupplung der gelüftete Zustand einstellt bleibt es bei der Kopplung des Elektromotors zur Brennkraftmaschine, was unerwünscht ist, insbesondere wenn vom Antrieb über die Brennkraftmaschine auf einen reinen Elektroantrieb umgeschaltet wird.

Der Erfindung liegt damit das Problem zugrunde, eine demgegenüber verbesserte Kupplungseinrichtung anzugeben.

Zur Lösung dieses Problems ist bei einer Kupplungseinrichtung der eingangs genannten Art erfindungsgemäß vorgesehen, dass zwischen den beiden ersten Außenlamellen ein zur ersten Innenlamelle radial außerhalb angeordnetes Federelement, gegen dessen Rückstellkraft die beiden Außenlamellen axial aufeinander zubewegbar sind, angeordnet ist.

Erfindungsgemäß wird nur in die erste Teilkupplung ein ringförmiges Federelement integriert, gegen das die beiden Außenlamellen angefedert sind respektive gegen das sie beim Zusammendrücken dieses Lamellenpaket unter Aufbau einer Rückstellkraft bewegt werden. Wird also über das Betätigungselement, beispielsweise den Drucktopf die erste Teilkupplung betätigt und zusammengedrückt, so wird automatisch das Federelement unter Aufbau einer Rückstellkraft deformiert. Wird die erste Teilkupplung wieder entlastet so drückt das sich entspannende Federelement die beiden Außenlamellen sofort auseinander, so dass der Reibschluss der Außenlamellen zur Innenlamelle unmittelbar aufgehoben und damit die Kopplung des Rotors zur Antriebsnabe der Brennkraftmaschine aufgehoben wird.

Da das Federelement die Innenlamelle radial umgreift, kann es auf einfache Weise in das Lamellenpaket integriert werden, ohne dass hierzu weiterer Bauraum benötigt wird. Auch kann hierüber sichergestellt werden, dass die erste Teilkupplung sehr einfach gehalten werden kann, da bei nur drei Lamellen lediglich ein einziges ringförmiges Federelement zu integrieren ist. Dieses kann auch hinreichend schmal ausgelegt werden, mithin mit relativ geringem Gewicht, so dass es keinen nennenswerten Einfluss auf das Massenträgheitsmoment hat. Insbesondere ist es nicht erforderlich, die erste Teilkupplung durch Integration mehrerer Außen- und Innenlamellen zu vergrößern.

Das Federelement kann gemäß einer ersten Erfindungsalternative als ringförmige Wellfeder ausgeführt sein. Eine solche Wellfeder kann aus einem Blech durch Umformen hergestellt werden. Sie wird beim Zusammendrücken des Lamellenpaktes ebenfalls zusammengedrückt, also deformiert, bei einer Entlastung nimmt sie ihre Wellenform wieder ein, worüber die Stahllamellen auseinander geschoben werden und das Betätigungselement, also beispielsweise der Drucktopf, zurückgestellt wird.

Die Wellfeder besitzt wie beschrieben einen etwas größeren Durchmesser als die erste Innenlamelle, so dass sie diese mit wenngleich geringem Abstand radial umgreift. Der Außendurchmesser ist ebenfalls möglichst klein zu wählen, mithin also die Wellfeder schmal auszuführen, so dass das Federelement möglichst leicht ist.
Die Wellfeder selbst kann unterschiedlich ausgeführt sein. Zum einen ist es möglich, dass sie ein in Umfangsrichtung laufendes Wellenprofil aufweist. Das heißt, dass sich in Umfangsrichtung gesehen Wellen und Täler abwechseln. Alternativ ist es auch denkbar, ein in Radialrichtung laufendes Wellenprofil vorzusehen. In diesem Fall verlaufen die Wellen und Täler in radialer Richtung, wobei hier natürlich nur wenige Wellen und Täler aufgrund der möglichst geringen Breite vorgesehen sind. Denkbar ist es sogar, nur eine einzige Welle auszubilden.

Alternativ zur Verwendung einer solchen Wellfeder kann das Federelement auch als ringförmige Tellerfeder ausgeführt sein. Auch diese Tellerfeder ist beim Zusammendrücken des ersten Lamellenpakets ohne weiteres unter Aufbau einer Rückstellkraft deformierbar und rückt im Entlastungsfall die Stahllammelen wieder auseinander und stellt das Betätigungselement, also den Drucktopf zurück.

Gemäß einer zweckmäßigen Weiterbildung kann die Kupplungseinrichtung eine dritte Teilkupplung umfassend mehrere an dem ersten oder dem zweiten oder einem dritten Außenlamellenträger vorgesehene dritte Außenlamellen und einen dritten Innenlamellenträger mit zwischen die dritten Außenlamellen greifenden dritten Innenlamellen umfassen, wobei die zweite und die dritte Teilkupplung separat betätigbar sind. Die zweite und die dritte Teilkupplung bilden eine Doppelkupplung innerhalb der Kupplungseinrichtung. Jede dieser beiden Teilkupplungen ist mit einer separaten Antriebsnabe, die zum Getriebe führt, gekoppelt, wobei jeder Antriebsnabe verschiedene spezifische Getriebestufen zugeordnet sind. Je nachdem welche der beiden Teilkupplungen betätigt wird, wird der eine oder der andere Getriebestufensatz zugeschaltet. Die zweite Teilkupplung wird üblicherweise mit K1 bezeichnet, während die dritte Teilkupplung mit K2 bezeichnet wird. Die erste Teilkupplung, die zur Kopplung von Elektromaschine und Brennkraftmaschine dient, wird mit K0 bezeichnet.

Die dritte Teilkupplung kann einen eigenen dritten Außenlamellenträger aufweisen, der in geeigneter Weise mit der Antriebsnabe der Brennkraftmaschine sowie der Elektromaschine gekoppelt ist. Alternativ können die dritten Außenlamellen aber auch am zweiten Außenlamellenträger der zweiten Teilkupplung angeordnet sein, das heißt, dass sich die zweite und die dritte Teilkupplung einen gemeinsamen Außenlamellenträger teilen. Denkbar ist es schließlich auch, die dritten Außenlamellen am ersten Außenlamellenträger, der dem Rotor zugeordnet ist, anzuordnen.

Gemäß einer besonders zweckmäßigen Ausgestaltung können die zweite und die dritte Teilkupplung axial hintereinander angeordnet sein, wobei die zweiten und die dritten Außenlamellen ebenfalls am ersten Außenlamellenträger angeordnet sind. In diesem Fall sind sowohl die beiden ersten Außenlamellen als auch die zweiten und dritten Außenlamellen am ersten Außenlamellenträger angeordnet. Daraus folgt, dass die erste, die zweite und die dritte Teilkupplung axial hintereinander angeordnet sind, sich also ein axialer Aufbau ergibt. Dieser kann dennoch relativ schmal gehalten werden, nachdem die erste Teilkupplung sehr schmal ist, da lediglich aus zwei Außenlamellen und einer Innenlamelle bestehend. Hierzu ist natürlich die Integration des Federelements in diese erste Teilkupplung, die Innenlamelle radial umgreifend, vorteilhaft. Alternativ zu einem solchen axialen Aufbau ist es denkbar, die dritte Teilkupplung radial innerhalb der zweiten Teilkupplung anzuordnen und die dritten Außenlamellen an dem dritten Außenlamellenträger anzuordnen. Es ist also ein radialer Aufbau zumindest der zweiten und dritten Teilkupplung vorgesehen. Hier können sich diese beiden Teilkupplungen einen gemeinsamen Außenlamellenträger teilen, weshalb die zweiten Außenlamellen entweder am ersten oder am zweiten Außenlamellenträger geführt sind, während die dritten Außenlamellen an einem dritten Außenlamellenträger angeordnet sind.

Die Kupplungseinrichtung selbst ist bevorzugt eine nasslaufende Kupplungseinrichtung.

Die Erfindung wird nachfolgend anhand von Ausführungsbeispielen unter Bezugnahme auf die Zeichnungen erläutert. Die Zeichnungen sind schematische Darstellungen und zeigen:
- Figur 1: eine Prinzipdarstellung einer erfindungsgemäßen Kupplungseinrichtung umfassend eine erste, eine zweite und eine dritte Teilkupplung, und
- Figur 2: eine vergrößerte Detailansicht des Bereichs der ersten Teilkupplung.

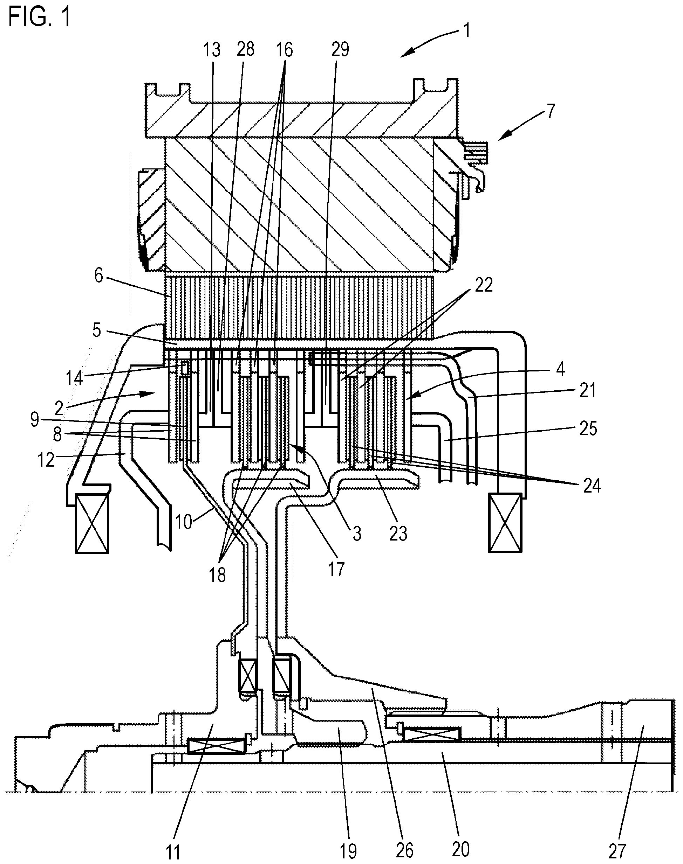

Figur 1 zeigt eine erfindungsgemäße Kupplungseinrichtung 1, umfassend eine erste Teilkupplung 2, eine zweite Teilkupplung 3 sowie eine dritte Teilkupplung 4. Die erste Teilkupplung 1 umfasst einen ersten Außenlamellenträger 5, der mit dem Rotor 6 einer Elektromaschine 7 verbunden ist. An dem ersten Außenlamellenträger 5, der in an sich bekannter Weise eine axial verlaufende Nutsruktur aufweist, sind zwei erste Außenlamellen 8 axial verschiebbar angeordnet, zwischen die eine erste Innenlamelle 9, die mit einem ersten Innenlamellenträger 10 verbunden ist, eingreift. Der erste Innenlamellenträger 10 seinerseits ist mit einer über eine nicht näher gezeigte Brennkraftmaschine antreibbaren Antriebsnabe 11 verbunden. Um dieses lediglich aus den beiden Außenlamellen 8 und der einen Innenlamelle 9 bestehende erste Lamellenpaket in Reibschluss zu bringen, ist ein Betätigungselement 12, zum Beispiel ein Drucktopf, der axial bewegt werden kann, vorgesehen. Dieser drückt gegen die in Figur 1 links gezeigte Außenlamelle 8, während die zweite Außenlamelle 8 an einem Widerlager 13 abgestützt ist. Beim Zusammenrücken kommt es zu einem Reibschluss, so dass eine ein Drehmoment übertragende Verbindung zwischen dem Rotor 6 und der Antriebsnabe 11 gegeben ist. Bei den beiden Außenlamellen 8 handelt es sich bevorzugt um Stahllamellen, bei der Innenlamelle 9 um eine Reiblamelle mit beidseitigen Reibbelägen.

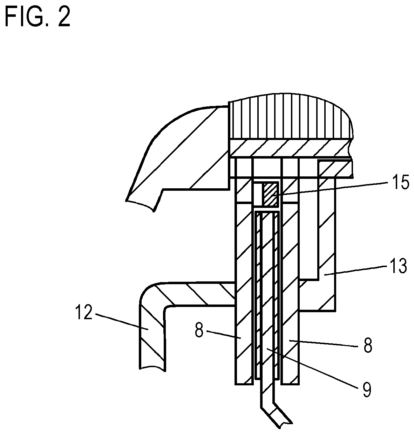

Erfindungsgemäß ist in dieses Lamellenpaket ein Federelement 14 integriert, bevorzugt eine ringförmig umlaufende Wellfeder 15, wie sie in der vergrößerten Darstellung gemäß Figur 2 gezeigt ist. Diese Wellfeder umgreift die Reiblamelle 9 radial, weist also einen etwas größeren Innendurchmesser als den Außendurchmesser der Reiblamelle 9 auf. Der Außendurchmesser ist ebenfalls möglichst gering gewählt, so dass die Wellfeder 15 auch möglichst leicht ist.

In der unbetätigten Stellung der ersten Kupplungseinrichtung 2, die exemplarisch in Figur 2 dargestellt ist, ist kein Reibschluss zwischen den beiden Außenlamellen 8 und der Innenlamelle 9 gegeben. Die Wellfeder 15 hat die beiden Außenlamellen 9 auseinandergedrückt, worüber der Reibschluss aufgehoben ist, die erste Teilkupplung 2 ist "gelüftet".

Wird nun zum Schließen der Teilkupplung 2 über das Betätigungselement 12 die links gezeigte Außenlamelle 8 nach rechts gegen das Widerlager 13 geschoben, so werden einerseits die Lamellen 8 und 9 in Reibkontakt gebracht, anderseits wird die Wellfeder 15 komprimiert, also deformiert, so dass sich eine Rückstellkraft aufbaut. Diese Rückstellkraft führt dazu, dass, wenn das Betätigungselement 12, das beispielsweise hydraulisch betätigt wird, wieder entlastet wird, die Wellfeder 15 die beiden Außenlamellen 8 auseinanderdrückt, so dass der Reibschluss zwischen den Lamellen 8 und 9 aufgehoben wird. Gleichzeitig wird das Betätigungselement 12, also beispielsweise der Drucktopf, wieder zurückgeschoben und in die Ausgangsstellung gebracht.

Die Federsteifigkeit der Wellfeder 15 ist den Anforderungen entsprechend ausgelegt. Die Einstellung kann beispielsweise durch die Anzahl der in Umfangsrichtung umlaufendenden Wellen oder das Federmaterial oder die Federdicke nach Bedarf eingestellt werden.

Die zweite Teilkupplungseinrichtung weist eine Vielzahl an zweiten Außenlamellen 16 auf, die in diesem Beispiel ebenfalls am ersten Außenlamellenträger 5 axial beweglich angeordnet sind. Sie umfasst ferner einen zweiten Innenlamellenträger 17, an dem axial beweglich eine Vielzahl von Innenlamellen 18 angeordnet sind. Die zweiten Außenlamellen 16 sind beispielsweise wiederum Stahllamellen, während die zweiten Innenlamellen 18 Reiblamellen sind. Der zweite Innenlamellenträger 17 ist mit einer Antriebsnabe 19, die mit einer Getriebeeingangswelle 20 gekoppelt ist, verbunden. Über ein Betätigungselement 21, beispielsweise wieder ein Drucktopf, kann das aus den Lamellen 16 und 18 bestehende zweite Lamellenpaket zum Schließen der Kupplung axial zusammengedrückt werden, so dass sich auch hier ein Reibschluss einstellt.

Die dritte Teilkupplung 4 weist ebenfalls eine Vielzahl an Außenlamellen 22, beispielsweise wiederum Stahllamellen auf, die auch hier am ersten Außenlamellenträger 5 axial beweglich angeordnet sind. An einem dritten Innenlamellenträger 23 ist eine Vielzahl an Innenlamellen 24 axial beweglich angeordnet, beispielsweise wiederum in Form von Reiblamellen. Auch dieses dritte Lamellenpaket kann über ein separates Betätigungselement 25, beispielsweise ein Drucktopf, axial zusammengedrückt und in Reibschluss gebracht werden. Der dritte Innenlamellenträger 23 ist mit einer weiteren Antriebsnabe 26, die mit einer weiteren Getriebewelle 27 gekoppelt ist, verbunden. Die beiden Lamellenpakete der zweiten und dritten Teilkupplungen 3, 4 sind gegen entsprechende Widerlager 28, 29 abgestützt.

Aufgrund der Integration der drei Teilkupplungen ist es möglich, entweder einen reinen elektrischen Antrieb zu realisieren, einen reinen Antrieb über die Brennkraftmaschine oder eine Unterstützung der Brennkraftmaschine über die Elektromaschine 7.

Für einen Elektroantrieb ist die erste Teilkupplung 2 geöffnet, so dass der Rotor 6 nicht mit der Antriebsnabe 11 gekoppelt ist. Zum Übertrag des über die Elektromaschine 7 erzeugten Drehmoments an das Getriebe ist entweder die zweite Teilkupplung 3 oder die dritte Teilkupplung 4 geschlossen, während die jeweils andere geöffnet ist. Soll allein über die Brennkraftmaschine der Antrieb erfolgen, so wird die erste Teilkupplung 2 geschlossen, so dass eine drehmomentfeste Verbindung zwischen der Antriebsnabe 11 und dem ersten Außenlamellenträger 5 gegeben ist. Je nach Bedarf wird sodann entweder die zweite Teilkupplung 3 oder die dritte Teilkupplung 4 geschlossen, während die andere geöffnet ist, um das von der Brennkraftmaschine gelieferte, über die Antriebsnabe 11 eingeleitete Drehmoment entweder an die erste Getriebewelle 20 oder die zweite Getriebewelle 27 zu leiten. In diesem Fall dreht der Rotor 6 der hier nicht betriebenen, also nicht bestromten Elektromaschine mit.

Soll die Brennkraftmaschine beispielsweise für eine Startvorgang über die Elektromaschine 7 unterstützt respektive angedreht werden, so wird lediglich die erste Teilkupplung 2 geschlossen, so dass der über die Elektromaschine 7 aktiv angetriebene Rotor 6 mit der Antriebsnabe 11 verbunden ist. Diese wird demzufolge gedreht, so dass die Brennkraftmaschine über die Elektromaschine 7 betätigt wird. Die beiden Teilkupplungen 3 und 4 sind in diesem Fall geöffnet, lediglich die an dem ersten Außenlamellenträger 5 angeordneten Außenlamellen 16 und 22 rotieren mit.

Wenngleich in Figur 1 die Außenlamellen 16 und 22 allesamt am ersten Außenlamellenträger 5 angeordnet sind, und sich folglich alle drei Teilkupplungen 2, 3 und 4 einen gemeinsamen Außenlamellenträger teilen, ist es natürlich denkbar, dass die zweite und/oder die dritte Teilkupplung 3, 4 jeweils einen separaten Außenlamellenträger aufweist, der dann in entsprechender Weise mit den entsprechenden Bauteilen zur Realisierung der oben beschriebenen Betriebsmodi gekoppelt ist.

Des Weiteren ist anstelle des in Figur 1 gezeigten axialen Aufbaus auch ein radialer Aufbau denkbar, indem beispielsweise die dritte Teilkupplung 4 radial innenliegend in der zweiten Teilkupplung 3 angeordnet ist. In diesem Fall umfasst die dritte Teilkupplung 4 einen eigenen dritten Außenlamellenträger.

Der konkrete Aufbau der Mehrfach-Kupplungseinrichtung ist nicht auf das in Figur 1 beschriebene Ausführungsbeispiel beschränkt. Es sind vielmehr beliebige andere Konfigurationsmöglichkeiten denkbar so lange sie im Schutzumfang der beigefügten Ansprüche enthalten sind. Ein wesentlicher Aspekt ist in jedem Fall jedoch die Integration des Federelements in die nur zwei Außenlamellen und eine Innenlamelle umfassende erste Teilkupplung 2 in der beschriebenen Form.

### Bezugszeichenliste

- 1.: Kupplungseinrichtung
- 2: Teilkupplung
- 3.: Teilkupplung
- 4.: Teilkupplung
- 5.: Außenlamellenträger
- 6.: Rotor
- 7.: Elektromaschine
- 8.: Außenlamellen
- 9.: Innenlamellen
- 10.: Innenlamellenträger
- 11.: Antriebsnabe
- 12.: Betätigungselement
- 13.: Wiederlager
- 14.: Federelement
- 15.: Wellfeder
- 16.: Außenlamellen
- 17.: Innenlamellenträger
- 18.: Innenlamellen
- 19.: Antriebsnabe
- 20.: Getriebeeingangswelle
- 21.: Betätigungselement
- 22.: Außenlamellen
- 23.: Innenlamellenträger
- 24.: Innenlamellen
- 25.: Betätigungselement
- 26.: Antriebsnabe
- 27.: Getriebewelle
- 28.: Widerlager
- 29.: Widerlager

## Patentansprüche

1. Kupplungseinrichtung umfassend eine erste Teilkupplung (2) umfassend einen mit einem Rotor (6) einer Elektromaschine (7) koppelbaren oder gekoppelten ersten Außenlamellenträger (5) mit wenigstens zwei ersten Außenlamellen (8) sowie einen ersten Innenlamellenträger (10) mit wenigstens einer zwischen die beiden ersten Außenlamellen (8) greifenden erste Innenlamellen (9), sowie wenigstens eine zweite Teilkupplung (3) umfassend mehrere an dem ersten oder einem mit dem Rotor (6) der Elektromaschine (7) koppelbaren oder gekoppelten zweiten Außenlamellenträger (5) vorgesehene zweite Außenlamellen (16) und einen zweiten Innenlamellenträger (17) mit zwischen die zweiten Außenlamellen (16) greifenden zweite Innenlamellen (18), wobei der erste Innenlamellenträger (10) mit einer über eine Brennkraftmaschine antreibbaren Antriebsnabe (11) und der zweite Innenlamellenträger (10) mit einer Antriebsnabe (19), die mit einer Getriebeeingangswelle (20) gekoppelt ist, verbunden ist **dadurch gekennzeichnet, dass** nur bei der ersten Teilkupplung zwischen den beiden ersten Außenlamellen (8) ein zur ersten Innenlamelle (9) radial außerhalb angeordnetes Federelement (14), gegen dessen Rückstellkraft die beiden Außenlamellen (8) axial aufeinander zu bewegbar sind, angeordnet ist.

2. Kupplungseinrichtung nach Anspruch 1, **dadurch gekennzeichnet, dass** das Federelement (14) eine ringförmige Wellfeder (15) ist.

3. Kupplungseinrichtung nach Anspruch 2, **dadurch gekennzeichnet, dass** die Wellfeder (15) ein in Umfangsrichtung laufende Wellenprofil oder ein in Radialrichtung laufendes Wellenprofil aufweist.

4. Kupplungseinrichtung nach Anspruch 1, **dadurch gekennzeichnet, dass** das Federelement (14) eine ringförmige Tellerfeder ist.

5. Kupplungseinrichtung nach einem der vorangehenden Ansprüche, **dadurch gekennzeichnet, dass** eine dritte Teilkupplung (4) umfassend mehrere an dem 1 ersten oder dem zweiten oder einem dritten Außenlamellenträger (5) vorgesehene dritte Außenlamellen (22) und einen dritten Innenlamellenträger (23) mit zwischen die dritten Außenlamellen (22) greifenden dritten Innenlamellen (24) vorgesehen ist, wobei die zweite und die dritte Teilkupplung (3, 4) separat betätigbar sind.

6. Kupplungseinrichtung nach Anspruch 5, **dadurch gekennzeichnet, dass** die zweite und die dritte Teilkupplung (3, 4) axial hintereinander angeordnet sind und die zweiten und dritten Außenlamellen (16, 22) ebenfalls am ersten Außenlamellenträger (5) angeordnet sind.

7. Kupplungseinrichtung nach Anspruch 5, **dadurch gekennzeichnet, dass** die dritte Teilkupplung (4) radial innerhalb der zweiten Teilkupplung (3) angeordnet ist und die dritten Außenlamellen (22) an dem dritten Außenlamellenträger angeordnet sind.

8. Kupplungseinrichtung nach einem der vorangehende Ansprüche, **dadurch gekennzeichnet, dass** es eine nass laufende Kupplungseinrichtung (1) ist.

## Claims

1. A clutch arrangement comprising a first sub-clutch (2) comprising a first outer disk carrier (5), which is coupled or can be coupled to a rotor (6) of an electric machine (7) and has at least two first outer disks (8), and a first inner disk carrier (10) having at least one first inner disk (9) that engages between the two first outer disks (8), and at least one second sub-clutch (3) comprising a plurality of second outer disks (16) provided on the first or on a second outer disk carrier (5) that is coupled or can be coupled to the rotor (6) of the electric machine (7) and a second inner disk carrier (17) having second inner disks (18) that engage between the second outer disks (16), wherein the first inner disk carrier (10) is connected to a drive hub (11) drivable via an internal combustion engine and the second inner disk carrier (10) is connected to a drive hub (19) that is coupled to a transmission input shaft (20), **characterized in that** a spring element (14), arranged radially outside the first inner disk (9), is only arranged between the two first outer disks (8) in the first sub-clutch, against the restoring force of which spring element the two outer disks (8) can be axially moved towards each other.

2. The clutch arrangement according to claim 1, **characterized in that** the spring element (14) is an annular wave spring (15).

3. The clutch arrangement according to claim 2, **characterized in that** the wave spring (15) has a wave profile running in the circumferential direction or a wave profile running in the radial direction.

4. The clutch arrangement according to claim 1, **characterized in that** the spring element (14) is an annular disk spring.

5. The clutch arrangement according to one of the preceding claims, **characterized in that** a third sub-clutch (4) is provided comprising a plurality of third outer disks (22) provided on the first or the second or a third outer disk carrier (5) and a third inner disk carrier (23) having third inner disks (24) engaging between the third outer disks (22), wherein the second and the third sub-clutches (3, 4) can be separately actuated.

6. The clutch arrangement according to claim 5, **characterized in that** the second and the third sub-clutch (3, 4) are arranged axially one after the other and the second and third outer disks (16, 22) are also arranged on the first outer disk carrier (5).

7. The clutch arrangement according to claim 5, **characterized in that** the third sub-clutch (4) is arranged radially within the second sub-clutch (3) and the third outer disks (22) are arranged on the third outer disk carrier.

8. The clutch arrangement according to one of the preceding claims, **characterized in that** it is a wet-running clutch arrangement (1).

## Revendications

1. Dispositif d'accouplement comprenant un premier sous-dispositif d'accouplement (2) comportant un premier support de lamelles externes (5) accouplé ou pouvant être accouplé à un rotor (6) d'une machine électrique (7) pourvu d'au moins deux premières lamelles externes (8) ainsi qu'un premier support de lamelles internes (10) pourvu d'au moins une première lamelle interne (9) en prise entre les deux premières lamelles externes (8), ainsi qu'au moins un deuxième sous-dispositif d'accouplement (3) comportant plusieurs deuxièmes lamelles externes (16) disposées au niveau du premier ou d'un deuxième support de lamelles externes (5) accouplé ou pouvant être accouplé au rotor (6) de la machine électrique (7) et un deuxième support de lamelles internes (17) pourvu de deuxièmes lamelles internes (18) en prise entre les deuxièmes lamelles externes (16), dans lequel le premier support de lamelles internes (10) est relié à un moyeu d'entraînement (11) pouvant être entraîné par l'entremise d'un moteur à combustion interne et le deuxième support de lamelles internes (10) est relié à un moyeu d'entraînement (19) qui est accouplé à un arbre d'entrée de transmission (20), **caractérisé en ce qu'**un élément à ressort (14) disposé à l'extérieur radialement par rapport à la première lamelle interne (9) est disposé uniquement sur le premier sous-dispositif d'accouplement entre les deux premières lamelles externes (8), les deux lamelles externes (8) pouvant être déplacées axialement l'une vers l'autre contre la force de rappel dudit élément à ressort.

2. Dispositif d'accouplement selon la revendication 1, **caractérisé en ce que** l'élément à ressort (14) est un ressort ondulé (15) annulaire.

3. Dispositif d'accouplement selon la revendication 2, **caractérisé en ce que** le ressort ondulé (15) présente un profil ondulé s'étendant dans la direction circonférentielle ou un profil ondulé s'étendant dans la direction radiale.

4. Dispositif d'accouplement selon la revendication 1, **caractérisé en ce que** l'élément à ressort (14) est un ressort à disques annulaire.

5. Dispositif d'accouplement selon l'une quelconque des revendications précédentes, **caractérisé en ce qu'**un troisième sous-dispositif d'accouplement (4) est en place, comportant plusieurs troisièmes lamelles externes (22) disposées au niveau du premier ou du deuxième ou d'un troisième support de lamelles externes (5) et un troisième support de lamelles internes (23) pourvu de troisièmes lamelles internes (24) en prise entre les troisièmes lamelles externes (22), dans lequel le deuxième et le troisième sous-dispositif d'accouplement (3, 4) peuvent être actionnés séparément.

6. Dispositif d'accouplement selon la revendication 5, **caractérisé en ce que** le deuxième et le troisième sous-dispositif d'accouplement (3, 4) sont disposés axialement l'un derrière l'autre et les deuxièmes et troisièmes lamelles externes (16, 22) sont disposées également sur le premier support de lamelles externes (5).

7. Dispositif d'accouplement selon la revendication 5, **caractérisé en ce que** le troisième sous-dispositif d'accouplement (4) est disposé radialement à l'intérieur du deuxième sous-dispositif d'accouplement (3) et les troisièmes lamelles externes (22) sont disposées sur le troisième support de lamelles externes.

8. Dispositif d'accouplement selon l'une quelconque des revendications précédentes, **caractérisé en ce qu'**il s'agit d'un dispositif d'accouplement (1) à fonctionnement humide.
